# EUROPÄISCHE PATENTSCHRIFT

(11) **EP 1 709 338 B1**
(45) Veröffentlichungstag und Bekanntmachung des Hinweises auf die Patenterteilung: **08.01.2014**
(21) Anmeldenummer: 05707026.0
(22) Anmeldetag: 27.01.2005
(51) Int. Cl.: F16C 19/18, F16C 19/50, F16C 33/32

(54) **Asymmetrisches zweireihiges Schrägkugellager mit Keramikkugeln mit unterschiedlichen Durchmessern**
Asymmetrical double-row angular contact ball bearing with ceramic balls having different diameters
Roulement à deux rangées à contact oblique asymétrique avec billes céramiques de diamètres différents

(30) Priorität: 31.01.2004 DE 202004001454 U
(43) Veröffentlichungstag der Anmeldung: 11.10.2006
(73) Patentinhaber: Aktiebolaget SKF, 415 50 Göteborg (SE)
(72) Erfinder: FRIEDL, Wolfgang, A-4400 Steyr (AT); SATHA, Julie, Bedfordshire LU6 3EL (GB)
(74) Vertreter: Kohl, Thomas
(86) Internationale Anmeldenummer: PCT/EP2005/000776
(87) Internationale Veröffentlichungsnummer: WO 2005/073573

(56) Entgegenhaltungen:
- WO-A-99/02873
- DE-A1- 4 305 289
- DE-C1- 19 845 671
- FR-A- 2 798 433
- US-A- 4 248 487
- US-A- 5 852 947
- US-A1- 2002 181 816
- US-A1- 2002 186 910
- US-A1- 2003 106 384

## Beschreibung

Die Erfindung betrifft eine Getriebe, das im Betrieb eine sehr hohe Drehzahl und hohe Temperatur aufweist, mit einem zweireihigen Schrägkugellager, das einen einteiligen Lagerring und einen in axialer Richtung zweigeteilten Lagerring aufweist, sowie zwischen diesen angeordnete Kugeln, wobei die Kugeln aufweist, sowie zwischen diesen angeordnete Kugeln, wobei die Kugeln der ersten Kugelreihe einen ersten Durchmesser und die Kugel der zweiten Kugelreihe einen zweiten Durchmesser aufweisen und der Durchmesser der Kugeln der ersten Kugelreihe deutlich kleiner ist als der Durchmesser der zweiten Kugelreihe.

Ein Kugellager dieser Art ist beispielsweise in der GB 152 018 beschrieben. Lager dieser Bauart werden beispielsweise bei Hochleistungskraftfahrzeugen, d.h. im Rennsport, eingesetzt. Insbesondere werden mit solchen Lagern die Getriebewellen eines Rennwagens gelagert. Da die Anforderungen an die Drehzahl und Steifigkeit des Lagers hier sehr hoch sind, werden die Lager mitunter als Vierpunktlager ausgeführt, was allerdings den übertragbaren Kräften Grenzen setzt. Bei entsprechend hohen Belastungen und großen Drehzahlen gelangen bekannte Wälzlager daher schnell an ihre Grenzen.

Andere Lageranordnungen sind in der US 2002/186910 A**,** in der WO 99/02873 A und in der US 5 852 947 A beschrieben.

Die nächstliegende US 2002/186910 A beschreibt ein Getriebe eines Hubschraubers mit einem zweireihigen, in O-Anordnung vorgespannten Schrägkugellager zur Lagerung einer mit einem Kegelzahnrad versehenen Welle. Das zweireihige Schrägkugellager weist einen einteiligen Außenring mit einstückig angeformtem Flansch und einen zweiteiligen Innenring auf. Die zwischen den Ringen angeordneten Kugeln sind in Käfigen, die an Schultern des geteilten Innenrings geführt sind, angeordnet. Die Kugeln einer Kugelreihe weisen einen kleineren Durchmesser auf als die Kugeln der anderen Kugelreihe, die näher zum Kegelzahnrad angeordnet ist. Der Teilkreis der Kugelreihe mit kleineren Kugeln ist kleiner ist als der Teilkreis der Kugelreihe mit den größeren Kugeln.

Der Erfindung liegt daher die **Augab**e zugrunde, das Getriebe mit dem zweireihigen Schrägkugellager so weiterzubilden, dass das Schrägkugellager zur Aufnahme höherer Kräfte bei sehr hohen Drehzahlen geeignet ist, wie sie insbesondere in Getrieben von Rennwagen auftreten.

Zur Lösung dieser Aufgabe ist ein Getriebe mit einem zweireihigen Schrägkugellager mit den Merkmalen des Anspruchs 1 vorgesehen. Erfindungsgemäß bestehen die Wälzkörper der beiden Wälzkörperreihen aus keramischem Material und sind die Kontaktwinkel sowie die Teilkreise der beiden Wälzkörperreihen unterschiedlich. Der Kontaktwinkel der ersten Wälzkörperreihe liegt im Bereich zwischen 5° und 35° und der Kontaktwinkel der zweiten Wälzkörperreihe liegt im Bereich zwischen 10° und 60°.

Vorzugsweise ist der einteilige Lagerring der Außenring des Lagers und der zweigeteilte Lagerring der Innenring.

Wie bei den genannten Anwendungen im Rennsport bereits bekannt, weist der Außenring vorzugsweise einen einstückig angeformten Flansch auf. Dieser Flansch kann bezüglich seiner axialen Position in Höhe einer der Wälzkörperreihen angeordnet sein.

Zur optimalen Versorgung des Lagers mit Schmiermittel ist weiterbildungsgemäß vorgesehen, dass im Kontaktbereich der Stirnflächen des zweigeteilten Lagerrings Schmieröffnungen eingebracht sind. Weiterhin kann vorgesehen sein, dass der Außenring mit Schmieröffnungen, insbesondere mit Schmierbohrungen, versehen ist.

Bevorzugt weisen die Wälzkörperreihen Käfige auf, die an einer Schulter zumindest einer der Lagerringe geführt sind. Mit Vorteil sind die Käfige an einer Schulter des zweigeteilten Lagerrings geführt. Als Material des Käfigs hat sich Kunststoff, vorzugsweise PEEK, bewährt.

Das vorgeschlagene Getriebe, das im Betrieb eine sehr hohe Drehzahl und eine hohe Temperatur aufweist, wird vorzugsweise in einem Rennwagen eingesetzt.

Mit dem erfindungsgemäßen Vorschlag wird ein Getriebe mit einem Wälzlager geschaffen, das unter extremen Bedingungen ein gutes Laufverhalten und eine relativ lange Lebensdauer aufweist. Es eignet sich optimal, um im Getriebe eines Rennwagens zum Einsatz kommen, in dem sehr hohe Kräfte bei hohen Drehzahlen und einer hohen Betriebstemperatur auftreten.

In der Zeichnung ist ein Ausführungsbeispiel der Erfindung dargestellt. Es zeigen:

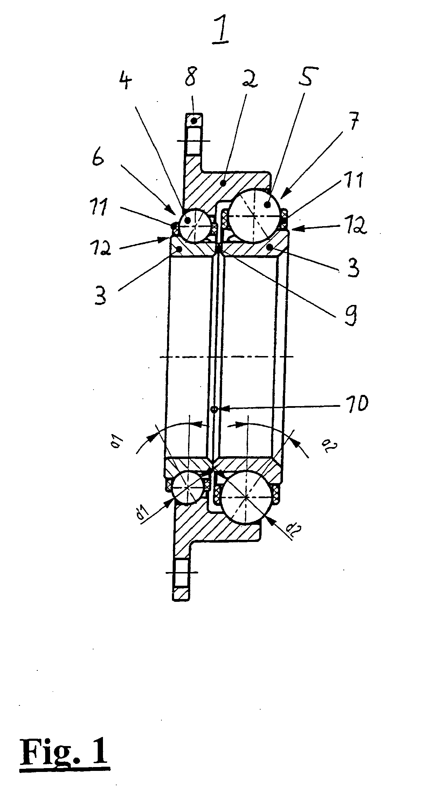

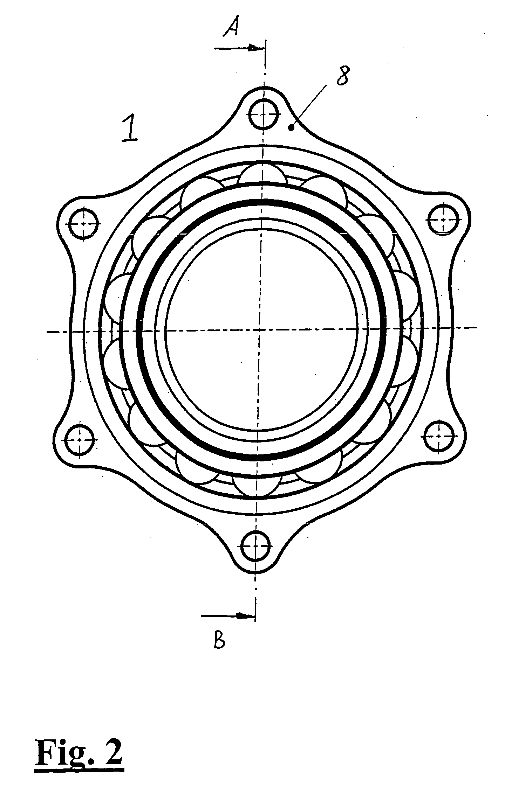

- Figur 1: den Radialschnitt durch ein zweireihiges Schrägkugellager (Schnitt A-B gemäß Figur 2) und
- Figur 2: die Seitenansicht dieses Lagers.

Das in den Figuren dargestellte Wälzlager 1 weist einen einteiligen Lagerring, und zwar den Außenring 2, auf sowie einen zweigeteilten Lagerring, nämlich den Innenring 3. Zwischen Außenring 2 und (zweiteiligem) Innenring 3 sind Wälzkörper 4 bzw. 5 in Form von Kugeln aus keramischem Material angeordnet. Keramikkugeln in einem Wälzlager sind als solche im Stand der Technik bekannt. Die Wälzkörper 4 bzw. 5 bilden je eine Wälzkörperreihe 6 bzw. 7.

Das Wälzlager 1 ist als Schrägkugellager ausgebildet. Der Kontaktbereich zwischen den Wälzkörpern 4, 5 und ihren jeweiligen Laufbahnen in den Lagerringen 2, 3 ist also unter einem Winkel zur Radialrichtung angeordnet. Die Kontaktwinkel sind für die beiden Wälzkörperreihen 6 bzw. 7 mit a₁ bzw. a₂ gekennzeichnet. Der Kontaktwinkel a₁ der ersten Wälzkörperreihe 6 liegt im Bereich zwischen 5° und 35°. Hingegen liegt der Kontaktwinkel a₂ der zweiten Wälzkörperreihe 7 im Bereich zwischen 10° und 60°.

Weiterhin ist zu sehen, dass bei den beiden Wälzkörperreihen 6 bzw. 7 Kugeln 4, 5 mit unterschiedlichem Durchmesser d₁ bzw. d₂ zum Einsatz kommen. Der Durchmesser d₁ der ersten Wälzkörperreihe 6 ist deutlich kleiner als der Durchmesser d₂ der zweiten Wälzkörperreihe 7; er liegt vorzugsweise im Bereich zwischen 50 % und 80 % des Durchmessers d₂.

Die Teilkreise der beiden Wälzkörperreihen 6 bzw. 7 sind unterschiedlich. Derjenige der ersten Wälzkörperreihe 6 ist kleiner als der der zweiten Wälzkörperreihe 7. Vorzugsweise beträgt der Teilkreisradius der ersten Wälzkörperreihe 6 zwischen 85 % und 95 % des Teilkreisradius der zweiten Wälzkörperreihe 7.

Wie weiterhin aus den Figuren hervorgeht, ist der Außenring 2 so ausgebildet, dass seine radial äußere Peripherie in einen Flansch 8 übergeht, der mit einer Anzahl Durchgangsbohrungen versehen ist, mit denen der Außenring 2 an einem Maschinenteil festgelegt werden kann. Die axiale Lage des Flansches 8 befindet sich hierbei genau in Höhe der ersten Wälzkörperreihe 6.

Die beiden Innenringe 3 liegen sich an der einander zugewandten Seite mit ihren Stirnflächen 9 gegenüber. Angedeutet ist, dass hier eine Schmieröffnung 10 angeordnet ist, mit der es möglich ist, die Kontaktstelle zwischen den Wälzkörpern 4, 5 und den Laufbahnen mit Schmiermittel zu versorgen.

Beide Wälzkörperreihen 6, 7 weisen auch in an sich bekannter Weise Käfige 11 auf. Diese bestehen aus Kunststoff, vorzugsweise aus dem Kunststoffinaterial PEEK. Die beiden Innenringe 3 weisen je eine Schulter 12 auf, an der der Käfig 11 anliegt und geführt wird.

Die Auswahl der Schmiegungen zwischen den Kugeln 4 bzw. 5 und ihren Laufbahnen in den Lagerringen 2, 3 werden in an sich bekannter Weise so ausgewählt, dass sich ein reibungsarmer Lauf ergibt. Gleiches gilt für die Auswahl der Lagerluft für beide Wälzkörperreihen.

## Patentansprüche

1. Getriebe, das im Berieb eine sehr hohe Drehzahl und hohe Temperatur aufweist, mit einem zweireihigen Schrägkugellager (1), das
- einen einteiligen Lagerring (2) und
- einen in axialer Richtung zweigeteilten Lagerring (3) sowie
- zwischen diesen angeordnete Kugeln (4,5), aufweist,
wobei die Kugeln (4) der ersten Kugelreihe (6) einen ersten Durchmesser (d₁) aufweisen, die Kugeln (5) der zweiten Kulgelreihe (7) einen zweiten Durchmesser (d₂) aufweisen und der Durchmesser (d₁) der Kugeln (4) der ersten Kugelreihe (6) deutlich kleiner ist als der Durchmesser (d₂₎ der zweiten Kugelreihe (7),
wobei die Kugeln (4, 5) aus keramischem Material bestehen,
wobei der Kontaktwinkel (α₁) der ersten Kugelreihe (6) verschieden ist vom Kontaktwinkel (a₂) der zweiten Kugelreihe (7), wobei die Teilkreise der beiden Kugelreihen (6, 7) unterschiedlich sind, wobei der Teilkreis der ersten Kugelreihe (6) kleiner ist als der Teilkreis der zweiten Kugelreihe (7) und wobei der Kontaktwinkel (α₁) der ersten Kugelreihe (6) im Bereich zwischen 5° und 35° liegt und der Kontaktwinkel (a₂) der zweiten Kugelreihe (7) im Bereich zwischen 10° und 60° liegt.

2. Getriebe mit einem zweireihigen Schrägkugellagen (1) nach Anspruch 1, **dadurch gekennzeichnet, dass** der einteilige Lagerring (2) der Außenring und der zweigeteilte Lagerring (3) der Innenring des Kugellagers (1) ist.

3. Getriebe mit einem zweireihigen Schrägkugellagen (1) nach Anspruch 1 oder 2, **dadurch gekennzeichnet, dass** der Außenring (2) einen einstückig angeformten Flansch (8) aufweist.

4. Getriebe mit einem zweireihigen Schrägkugellagen (1) nach Anspruch 3, **dadurch gekennzeichnet, dass** der Flansch (8) bezüglich seiner axialen Position in Höhe der ersten Kugelreihe (6) angeordnet ist.

5. Getriebe mit einem zweireihigen Schrägkugellagen (1) nach einem der Ansprüche 1 bis 4, **dadurch gekennzeichnet, dass** im Kontaktbereich der Stirnflächen (9) des zweigeteilten Lagerrings (3) Schmieröffnungen (10) eingebracht sind.

6. Getriebe mit einem zweireihigen Schrägkugellager (1) nach einem der Ansprüche 1 bis 5, **dadurch gekennzeichnet, dass** der Außenring (2) mit Schmieröffnungen, insbesondere mit Schmierbohrungen, versehen ist.

7. Getriebe mit einem zweireihigen Schrägkugellager (1) nach einem der Ansprüche 1 bis 6, **dadurch gekennzeichnet, dass** die Kugelreihen (6, 7) Käfige (11) aufweisen, die jeweils an einer Schulter (12) zumindest einer der Lagerringe (2, 3) geführt sind.

8. Getriebe mit einem zweireihigen Schrägkugellager (1) nach Anspruch 7, **dadurch gekennzeichnet, dass** die Käfige (11) jeweils an einer Schulter (12) des zweigeteilten Lagerrings (3) geführt sind.

9. Getriebe mit einem zweireihigen Schrägkugellager (1) nach Anspruch 7 oder 8, **dadurch gekennzeichnet, dass** der Käfig (11) aus Kunststoff, vorzugsweise aus PEEK, besteht.

10. Rennwagen, in dem ein Getriebe mit einem zweireihigen Schrägkugellager (1) nach einem der Ansprüche 1 bis 9 eingesetzt ist.

## Claims

1. Gearbox which has a very high rotational speed and high temperature during operation, having a two-row angular-contact ball bearing (1) which has
- a single-piece bearing ring (2),
- a bearing ring (3) which is split in two in the axial direction, and
- balls (4, 5) which are arranged between them,
the balls (4) of the first ball row (6) having a first diameter (d₁), the balls (5) of the second ball row (7) having a second diameter (d₂), and the diameter (d₁) of the balls (4) of the first ball row (6) being considerably smaller than the diameter (d₂) of the second ball row (7), the balls (4, 5) consisting of ceramic material, the contact angle (α₁) of the first ball row (6) being different from the contact angle (α₂) of the second ball row (7), the pitch circles of the two ball rows (6, 7) being different, the pitch circle of the first ball row (6) being smaller than the pitch circle of the second ball row (7), and the contact angle (α₁) of the first ball row (6) lying in the range between 5° and 35°, and the contact angle (α₂) of the second ball row (7) lying in the range between 10° and 60°.

2. Gearbox having a two-row angular-contact ball bearing (1) according to Claim 1, **characterized in that** the single-piece bearing ring (2) is the outer ring and the split bearing ring (3) is the inner ring of the ball bearing (1).

3. Gearbox having a two-row angular-contact ball bearing (1) according to Claim 1 or 2, **characterized in that** the outer ring (2) has an integrally moulded flange (8).

4. Gearbox having a two-row angular-contact ball bearing (1) according to Claim 3, **characterized in that**, with regard to its axial position, the flange (8) is arranged at the level of the first ball row (6).

5. Gearbox having a two-row angular-contact ball bearing (1) according to one of Claims 1 to 4, **characterized in that** lubricating openings (10) are made in the contact region of the end faces (9) of the split bearing ring (3).

6. Gearbox having a two-row angular-contact ball bearing (1) according to one of Claims 1 to 5, **characterized in that** the outer ring (2) is provided with lubricating openings, in particular with lubricating holes.

7. Gearbox having a two-row angular-contact ball bearing (1) according to one of Claims 1 to 6, **characterized in that** the ball rows (6, 7) have cages (11) which are guided in each case on a shoulder (12) of at least one of the bearing rings (2, 3).

8. Gearbox having a two-row angular-contact ball bearing (1) according to Claim 7, **characterized in that** the cages (11) are guided in each case on a shoulder (12) of the split bearing ring (3).

9. Gearbox having a two-row angular-contact ball bearing (1) according to Claim 7 or 8, **characterized in that** the cage (11) is composed of plastic, preferably of PEEK.

10. Racing car, in which a gearbox having a two-row angular-contact ball bearing (1) according to one of Claims 1 to 9 is used.

## Revendications

1. Transmission, présentant, pendant le fonctionnement, une vitesse de rotation très élevée et une température élevée, comprenant un roulement à billes à deux rangées à contact oblique (1), lequel présente
- une bague de roulement d'une seule pièce (2) et
- une bague de roulement (3) divisée en deux dans la direction axiale et
- des billes (4, 5) disposées entre celles-ci, les billes (4) de la première rangée de billes (6) présentant un premier diamètre (d₁), les billes (5) de la deuxième rangée de billes (7) présentant un deuxième diamètre (d₂) et le diamètre (d₁) des billes (4) de la première rangée de billes (6) étant nettement inférieur au diamètre (d₂) de la deuxième rangée de billes (7),
les billes (4, 5) se composant de matériau en céramique,
l'angle de contact (α₁) de la première rangée de billes (6) étant différent de l'angle de contact (α₂) de la deuxième rangée de billes (7), les cercles partiels des deux rangées de billes (6, 7) étant différents, le cercle partiel de la première rangée de billes (6) étant inférieur au cercle partiel de la deuxième rangée de billes (7) et l'angle de contact (α₁) de la première rangée de billes (6) étant compris dans une plage de 5° à 35° et l'angle de contact (α₂) de la deuxième rangée de billes (7) étant compris dans une plage de 10° à 60°.

2. Transmission comprenant un roulement à billes à deux rangées à contact oblique (1) selon la revendication 1, **caractérisée en ce que** la bague de roulement d'une seule pièce (2) est la bague extérieure et la bague de roulement divisée en deux (3) est la bague intérieure du roulement à billes (1).

3. Transmission comprenant un roulement à billes à deux rangées à contact oblique (1) selon la revendication 1 ou 2, **caractérisée en ce que** la bague extérieure (2) présente une bride (8) façonnée d'une seule pièce.

4. Transmission comprenant un roulement à billes à deux rangées à contact oblique (1) selon la revendication 3, **caractérisée en ce que** la bride (8) est disposée par rapport à sa position axiale à la hauteur de la première rangée de billes (6).

5. Transmission comprenant un roulement à billes à deux rangées à contact oblique (1) selon l'une quelconque des revendications 1 à 4, **caractérisée en ce que** dans la région de contact des faces frontales (9) de la bague de roulement divisée en deux (3) sont pratiquées des ouvertures de lubrification (10).

6. Transmission comprenant un roulement à billes à deux rangées à contact oblique (1) selon l'une quelconque des revendications 1 à 5, **caractérisée en ce que** la bague extérieure (2) est pourvue d'ouvertures de lubrification, notamment d'alésages de lubrification.

7. Transmission comprenant un roulement à billes à deux rangées à contact oblique (1) selon l'une quelconque des revendications 1 à 6, **caractérisée en ce que** les rangées de billes (6, 7) présentent des cages (11) qui sont à chaque fois guidées sur un épaulement (12) d'au moins l'une des bagues de roulement (2, 3).

8. Transmission comprenant un roulement à billes à deux rangées à contact oblique (1) selon la revendication 7, **caractérisée en ce que** les cages (11) sont à chaque fois guidées sur un épaulement (12) de la bague de roulement divisée en deux (3).

9. Transmission comprenant un roulement à billes à deux rangées à contact oblique (1) selon la revendication 7 ou 8, **caractérisée en ce que** la cage (11) se compose de plastique, de préférence de PEEK.

10. Voiture de course, dans laquelle est utilisée une transmission comprenant un roulement à billes à deux rangées à contact oblique (1) selon l'une quelconque des revendications 1 à 9.
